(19)

**Europäisches Patentamt**
**European Patent Office**
**Office européen des brevets**

(11)   **EP 2 098 984 A1**

(12)   **EUROPEAN PATENT APPLICATION**

(43) Date of publication:
**09.09.2009 Bulletin 2009/37**

(51) Int Cl.:
**G06Q 10/00** *(2006.01)*

(21) Application number: **08254023.8**

(22) Date of filing: **17.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.03.2008 GB 0803967**
**04.06.2008 GB 0810218**

(71) Applicant: **Colt Telecom Group Limited**
**London EC3A 7QN (GB)**

(72) Inventors:
• **Agnew, Peter George**
**Woking**
**Surrey GU2 14PN (GB)**

• **Falcon, Francis Allan**
**Leighton Buzzard**
**Beds. LU7 0TA (GB)**
• **Gilton, Geoffry Troy**
**London W8 5PP (GB)**
• **O'Brien, Murrough Francis Henry**
**Chelmsford**
**Essex CM3 5RX (GB)**

(74) Representative: **Loveless, Ian Mark**
**Reddie & Grose**
**16 Theobalds Road**
**London**
**WC1X 8PL (GB)**

(54)   **Work request control system**

(57)   A work request control system for receiving work requests from input devices provides a priority queuing mechanism for performance of tasks by a finite pool of heterogeneous resources. An input receives work requests from input devices and an attribute mechanism receives the work requests and determines the values of each of multiple attributes for each work request. A queue mechanism calculates using the multiple attributes and by considering each request as a multi-dimensional eigenvector the relative distance of each eigenvector in relation to a reference eigenvector and asserts the work requests in a priority order determined by the relative distance of each eigenvector.

Figure 1

EP 2 098 984 A1

**Description**

**FIELD OF THE INVENTION**

The invention relates to a work request control system for ensuring that requests made for performance of tasks are appropriately handled. In particular, the invention relates to such systems for use in telecommunications and computing, but may be equally applicable to any industrial field.

**BACKGROUND OF THE INVENTION**

In many fields, there is a need to ensure that requests for performance of work are handled appropriately. Such requests may be treated as discrete "events" or "tasks". It is particularly important to control work requests in systems involving a relationship of many sources of request for completion of tasks to many devices that may undertake such tasks. The need for appropriate control is particularly noted for systems having a finite pool of heterogeneous resources, by which we mean the resources to perform the work have varying capabilities.

There are many examples of industrial systems in which requests for work are performed by finite pools of heterogeneous resources. For example, the manufacturing industry is typically arranged with separate manufacturing sites, each having multiple production lines with varying capabilities of performing work in the sense that each production line may handle a different type of manufacturing or have different speed or quality of production. In this sense, each manufacturing or assembly line can be thought of as one of a pool of heterogeneous resources.

A control system for such industrial processors would take requests for performance of work which could be input by input devices, such as dedicated hardware or a general purpose interface and would assert requests for work by each production line, either directly or via a further mechanism.

A further example of systems involving such many to many relationships are in the field of telecommunications and computing in which use of telecommunication devices, such as network switches, is requested from multiple sources, user input devices attempting to make telecommunication connections. In such systems, arrangements are needed to ensure that requests from the user devices to network switches are appropriately scheduled and processed to completion in appropriate order and in appropriate time according to a defined policy. Various strategies have developed for control of such arrangements depending upon purpose. So called "best effort" arrangements simply take requests for telecommunication connection in order of receipt and attempt to fulfill each request irrespective of other factors. More complex arrangements attempt to provide pre-defined Quality of Service "QoS" and to manage each request accordingly.

A yet further example of how arrangement in which many input devices request performance of work from many resources is in the field of grid computing. Input devices, which may be general purpose computers, can request performance of work in the form of requests for calculations or running of applications from a grid computing network comprising multiple physical or virtual machines. Various existing techniques are known for managing grid computing network, which typically work by attempting to maximise the handling of each process. In essence, each request, once under execution, is processed to completion. Such known systems attempt to provide a predefined quality of service but, in reality, are closer to being best effort systems, because each request for execution, when allocated to resources, will process to completion, irrespective of further requests.

We have appreciated the need to improve arrangements for controlling requests for performance of work, such as completion of tasks requested by many sources for many services provided by resources. Such a model of sources of request and resources to perform work may cover a wide range of industries as explained above including telecommunications, production lines, machine control systems and computing, in particular grid computing in which requests for execution of processes are made from many terminals to many processors or processes.

**SUMMARY OF THE INVENTION**

The invention is defined in the claims to which reference is now directed.

An embodiment of the invention is a work request control system for use with a network such as a telecoms network or a computing network using multiple attributes. The control system receives requests for performance of tasks from input devices (in practice thousands of such devices) and provides output control signals to devices such as telecommunications switches or computing processes. The embodiment of the invention uses eigenvectors as a mechanism to reduce multiple attributes for multiple requests (also referred to as "events") to single score values per event that are ranked within a queue. The use of eigenvectors and such a queuing arrangement enhances speed of processing such requests whilst ensuring that multiple heterogeneous factors are taken into account.

The control system may directly or indirectly control the resources for performing work. The main embodiment provides indirect control by providing a control signal which provides, for each event, the authority for the event to be processed. In a sense, the control system acts to "push" the tasks to the target devices or other resources in contrast to typical known "pull" arrangements in which devices repeatedly poll a FIFO queue to take requests in turn.

The embodiment of the invention incorporates three aspects for ensuring the appropriate priority is given to work requests. An attribute mechanism receives work requests and, based on selections made by the input device, determines the values of each of multiple attributes to apply based upon prestored sets of attribute values. A queue mechanism receives the work requests with the associated multiple attribute values and reduces the multiple attribute values to eigenvectors, as mentioned above. A particular benefit is that the queue mechanism evaluates both newly received requests and existing work requests that are being performed and ranks both newly received requests and existing requests in the same ranking process. The queue mechanism can be notionally considered as two separate pools of requests, an evaluation pool where new requests are evaluated and a work request pool for work requests that are being undertaken. Although notionally considered as two separate pools, these could equally be considered as a single queue with an indicator to show whether or not a given work request is being performed.

A resource state database maintains an indication of the capabilities and availability of the heterogeneous resources, as well as the work requests being executed and the resources that they are using. In synergy with the queue mechanism, this provides a particular advantage in that work requests newly received may be attributed a higher score than work requests already being processed and, if there is a contention for resources, a work request being processed may be displaced in favour of a new request. This is possible because the resource state database is able to inform the work request pool whether resources are available and, if not, the work request pool can return work requests that are superseded by incoming requests to the evaluation pool.

The embodiment of the invention is therefore able to control work requests in a true quality of service manner, rather than the best effort manner of previous systems.

A further feature of the queue mechanism embodying the invention is a profile mechanism which can select an appropriate set of operational parameters for a work request. An initial profile or set of operational parameters is selected when the work request is first presented to the evaluation pool and subsequently asserted to the work request pool. In the event that there is a contention for resources, the work request pool can reject a work request and the profile mechanism will then select an alternative profile specifying a set of operational parameters for processing of the work request and the request is then returned to the evaluation pool awaiting assertion to the work request pool.

The control system embodying the invention can be used in a variety of configurations. In a grid computing arrangement the events are requests for processing and the devices are physical or virtual processors within a grid array.

Many further embodiments may be envisaged, all using a control system to govern the undertaking of tasks represented by events using the technique of the present invention.

## BRIEF DESCRIPTION OF THE DRAWINGS

An embodiment of the invention will now be described by way of example only and with reference to the accompanying drawings in which:

Figure 1    schematically shows a work request control system embodying the invention for a system comprising multiple input devices requesting work from multiple resource devices;

Figure 2    schematically shows the administration functions for the system;

Figure 3    schematically shows the control system referred to as a policy engine embodying the invention in a grid computing arrangement;

Figure 4    shows an example list of attributes and values;

Figure 5    shows the values of attributes for example events; and

Figure 6    shows the ranking and scoring mechanism.

## DETAILED DESCRIPTION

The embodiment of the invention described is a control system for a network comprising multiple resources that may perform work by execution of tasks or events. Such a network could be a telecommunications network or computing network, but is preferably a grid computing network in which the resources comprise physical or virtual machines arranged to execute processes. The requests for performance of the work by completion of tasks or execution of events are input to the network by multiple input devices. The input devices may comprise dedicated hardware for requesting specific processes, but more typically will comprise user terminals running operating systems to allow users to request execution of individual processes or applications.

The control system includes an input for receiving requests, an attribute mechanism, a queue mechanism and a resource state database. In the embodiment, these mechanisms will be referred to as a "policy engine" in later description.

Overview

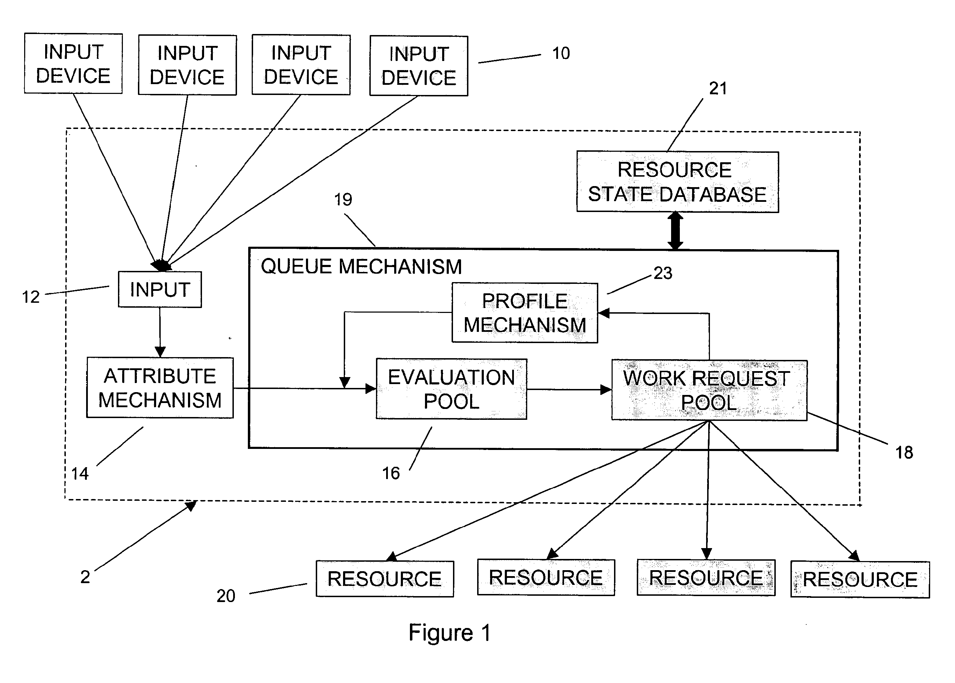

The overall architecture of the system embodying the invention will first be described with reference to Figure 1. As shown in Figure 1, multiple input devices 10 which are typically general purpose devices, such as personal computers, submit requests for work at an input 12 to the control system 2. The input 12 provides the work request to an attribute mechanism 14.

The purpose of the attribute mechanism is to reduce the work requests to a set of values representing attributes of the task or requests. The values of these attributes will then be used by the subsequent queue mechanism. The way that the attribute mechanism operates will be discussed in detail later but, in brief, each work request will comprise a message identifying the source of the request, the work to be performed and the name of an attribute set identified by a "customer class" selected by the user of the input device from a range of possible customer SLA classes. The attribute mechanism will compare the selected class identifying an attribute set, the nature of the work request and the source of the request to a preconfigured store of attribute values to determine the attribute values appropriate to the request. It is a particular feature of the embodiment that the number of attributes and range of attribute values may be varied within the attribute mechanism and this will be automatically handled within the subsequent queue mechanism. The attribute mechanism also determines the appropriate "policies", namely what action should be taken if the work request is performed.

The resulting output message from the attribute mechanism comprises:

The original Event/Request
The policies that were found to be appropriate
The value of each of the attributes assigned to the Event/Request

The values of the attributes will be described later, but in brief including various factors to assist in determining the priority of the request and also the way in which the request should be handled. One such attribute is a "profile" specifying the resource requirements for the work request.

The attribute mechanism selects an initial profile, which identifies a set of parameters for execution of the request, in particular, a set of run-time parameters. The initial profile is one of the attributes and so is determined by the attribute mechanism. If the initial profile cannot be used due to a contention with another work request, then the profile mechanism will select a different profile when attempting to present the work request for execution a second time, as described later.

The work request in the form of a task or event message is then passed to the queuing mechanism where a score of the task is calculated. The score is calculated by considering either all, or a subset of the attribute values as a multidimensional eigenvector, (the number of dimensions being the number of different attributes used in the calculator) and comparing the relative distance of the eigenvector to a reference eigenvector. In this way, the multivariable information can be reduced to a single score representing the distance from the reference eigenvector. The queue mechanism can then order the work requests, according to the single score, rather than trying to perform multivariable comparisons, as in prior arrangements. The queue mechanism thus reduces the work requests to a queue of tasks that is indexed and prioritised by the score of each task and comprises:

The original Event/Request
The policies that were found to be appropriate
The calculated score.

The pool of requests for work can be considered as an evaluation pool and a work request pool. Of importance, though is that the scoring of the work request is evaluated across both newly received requests in the evaluation pool and work request that are being undertaken in the work request pool. It is convenient to consider the requests in terms of these two separate pools but, alternatively, a single queue with work requests designated as "being executed" or "awaiting execution" would provide the same result.

When each work request reaches the top of the evaluation pool queue 16, as defined by the score given by the queuing mechanism, the work request is pushed to a work request pool 18 where it is allocated to one or more of the available resources 20 for execution. While in the work request pool, the work requested can be considered to be being performed. Specifically, in the grid computing embodiment described, the task represented by the work request is being executed by one or more of the virtual machines in the grid computing network.

A particular advantage arises from the use of an evaluation pool 16 notionally separate from a work request pool 18 in the grid computing environment. In the event that a particular task in the work request pool conflicts with another task (for example, the two tasks require the same resource), then the task with the lower priority can be removed from the pool of requests being executed and returned to the evaluation pool 16. The queue mechanism retains the score of the work request but can select an alternative appropriate profile. This process ensures that requests are properly handled whenever there is a contention for resources. The profiles specify the execution parameters to be used.

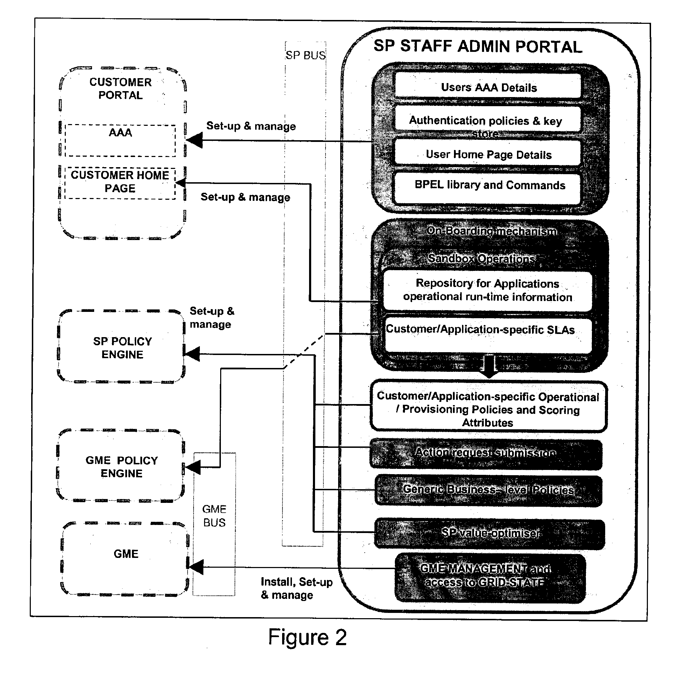

The embodiment of the invention will be described in greater detail with reference to Figures 2 to 6. For ease of understanding, the attribute mechanism 14 and queue mechanism 19, shown in Figure 1, are described in terms of the functions of a policy engine in Figure 2. The work request pool 18 and resource state database, in Figure 1, are described as a function of a grid management engine. The policy engine handles the request for work for input devices, as already described. As the number of requests increases, the policy engine continues to process such requests using the approach of eigenvectors already described, in contrast to prior systems in which Boolean mechanisms would break down as being unable to cope with the volume of variables.

In prior systems this results in contradictory priorities and actions in response to the requests, which are slow to implement and prevent the Service Provider meeting the terms of the Service Level Agreements (SLA) with the customers. In the worst case the resulting actions contradict previous decisions and actions such that existing services being delivered to earlier customers are disrupted and the terms of their SLAs are not met.

The embodiment of the invention using the "Scoring" mechanism operated by the Policy Engine reduces the number of variables to a single numerical value per request, which completely eliminates the need for complex Boolean algorithms. It also greatly simplifies the prioritisation calculation such that all the previous prioritisation decisions can be recursively incorporated into the current calculation. The result is a definitive set of priorities and actions for each request that reflects those necessary to ensure that the terms of the SLA are met for all the current and previous requests. This mechanism is detailed under the Policy Engine description below.

Configuration of the system

A system embodying the invention must be configured prior to even considering the requirements of any individual customer. In industrial applications, such as production lines mentioned above, configuration of the system takes into account the nature of the work requests that would be received and the nature of the resources to perform those work requests. In the context of the present grid management embodiment, the configuration will similarly need to take account of the likely request to be received and the processing availability within the grid.

The following five steps are undertaken when configuring the system. For ease of reference, the steps refer to tables shown in the Annex to this document:

1. The Service Provider defines a set of attributes that are going to describe each and every work request or event submission that the platform can deal with. Each work request will use some parts of the set.
2. The Service Provider defines the range of allowable values for each attribute and creates a tabular record shown in Table 1.
3. The Service Provider identifies those work requests that will originate from:

1. Customers as work request submissions, shown in Table 2.
2. Business & Admin work request or event submissions, shown in Table 3.
3. Policy Engine events only, shown in Table 4.

4. The Service Provider defines the sub-set of attributes associated with each work request or event that will be used to calculate its score.
5. The Service Provider defines the Policy Actions to take for each work request or event and associates with each in the tabular record, as shown in Tables 2, 3 & 4.

As described above and shown in Tables 1-4, the initial system configuration provides the ranges of attributes that will be used when receiving work request events, specifies which of those attributes will be used in calculating the score within the queue mechanism and also specifies the policy actions to be taken, assuming that the score of a given work request is such that it is processed.

The example attributes shown in Table 1 will be discussed in further detail below. One particular attribute of note is the "customer class" attribute, which is used in three ways within the system. First, it is used as part of the score calculation. Second, it is used as the name for a set of attributes that the user can select at the point of submitting a work request. Lastly, it is used to specify the initial run time parameters that are used when attempting to undertake the requested work. The run time parameters are referred to herein as a "profile".

As described above, Table 2 shows the nature of each event/task, the attributes used to calculate the score of such tasks and the policy actions to take on receipt of customer events, namely request for performance of some work/task. A straightforward example from Table 2 is the third type of task, "start application". The attributes used in calculating the score for this type of task are S1-S5 and S9. On reaching the top of the queue, the policy action to be taken on receipt of this type of task is to allocate and start the required resources using the score for the received request. It is noted that the calculation of the score is only based on certain attributes and does not include the attribute S15 that specifies the execution parameters or "profile".

Table 3 shows the various administration events, which may be requested by a system administrator. Taking the first type of event/task as an example, namely "move application"; this also uses attributes S1-S5 and S9 as the basis for calculation and additionally also uses attribute S15, which is the profile attribute. The reason for this being that if the system administrator requests that a task being processed should be moved from one set of resources to another, then the customer affected to have the request increased in score so as to ensure that the move to request is then given priority in relation to the alternate resources that will then be used for execution.

As explained above, to determine the score for any event/task, we must first define a set of attributes that can be associated with any event and the numerical value for each individual attribute. The following explains the attributes shown in Table 1:

1. S1 is defined to reflect the score for customer categories. Customers may select one of 5 classes for a given request and the score for each customer class is assigned as shown in Table 1;

2. Customers' SLA requirements per application will be specified in the term of guaranteed execution percentile. This will specify what percentage of tasks of a given class which will complete within a specified time interval. The score for S2 will be computed as follows:

Let X = percentage of SLA term
The Score can be computed from the percentage of SLA term
from the following function:

$$\text{Score} = (10^{\wedge}(-\log(1-x)))/10$$

3. S3 is defined to reflect the severity of penalty clauses for that application for that customer. The score for S3 will depend on the financial value of the penalty which will be a function of the contract amount. As an example, we use a linear function between S3 score and penalty amount here to determine the S3 value. Thus, a high score corresponds directly to a high penalty amount.

4. S4 represents a priority change request from customers when they submit their task. For example, customers can request that their job/task be completed in a shorter time than that specified in the SLA in return for agreeing to pay an increased fee. Here, we define five levels of priority change request and their corresponding scores. We also want to limit the requests that the customers can submit to avoid over-complex situations arising. The details of the request need to be defined in the SLA. The Default value for S4 will be zero, which means that no priority change is requested by customers.

5. S5 represents different classes of users within a Customer Account. We define three classes of users: high-100, medium-50, low-0.

6. S6 represents the level of breach occurring. We define three levels of breach. The score for each level of breach will be proportional to the S3 value (i.e. penalty amount). For example, at Level 1 breach S6 will be assigned a value of 5 times S3 value and at Level 3 (most severe breach) S6 will be assigned a value of 15 times S3 value. The detail on the level of the breach needs to be specified in the SLAs.

7. S7 represents the level of suspension requested by an evaluated Policy. We define 3 levels of suspension and assign value for each level of suspension. Level 1 = still time to complete later, level 2 = low possibility of resulting in a SLA breach, Level 3=high possibility of resulting in a SLA breach (highest score=1000)

8. S8 is the attribute associated with multiple events effecting a single customer. Three levels are defined, low = 1000; Medium = 2000 and high = 4000.

9. S9 represents the value of the customer's business to the Service Provider by its established standard. The score will take into consideration a wide range of variables such as annual revenue generated from that customer, length of time that customer has contracted for managed services, contract amount value and future revenue-generation potential. The score has a range from 0 to 2000.

10. S10 represents the class associated with requests from Admin. We define five Admin classes, Copper (1), Bronze(10), Silver(100), Gold (1000), and Platinum(10000) which will allow for requests from Admin to be scored higher and processed with more urgency.

11. S11 represents the priority change request from Admin. S11 is similar to S4, but is requested by Admin. An Admin can make a priority change request no larger than the score associated with its Admin class, i.e. S11 <= S10.

12. S12 represents the score for the percentages of initially scheduled execution time that has passed when the event was triggered. The score will be proportional to the percentage of allowed time passed, i.e. a higher score if higher percentage of allowed time has passed. At this time, we define S12 as
S12 = 1000 * Percentage of initially allocated time passed
For example, if 90% of initially allocated time has passed, score =1000 * 90%= 900.

13. S13 represents the score for the percentage of task completed when the event was triggered. The score will be inversely proportional to the percentage of the task completed.
S13 = 1000 * (1- Percentage of task completed)
For example, if 90% of task has been completed, S13=1000 * (1-0.9) = 100

14. S14 is an indication on what percentage of planned suspension time has passed. It will be proportional to that percentage. S14 represents the state of the suspension and priority to resume the suspended applications. For example, if 90% of the initially planned suspension time has passed, S14 will have a score of 90.

15. S15 represents an agreed "profile" that contains the resource requirements for an application, starting at Profile 1 for the ideal resource allocation. Higher values of Profile indicate the ideal allocation is not available thus raises the importance of employing subsequent allocation profiles.

16. S16 represents the application's demand on network connectivity. Currently three levels of requirements for network connectivity are defined.

17. S17 represents availability of appropriate bandwidth in the network. Its value will be proportional to the percentage of available bandwidth at a given time.

18. S18 is a special attribute that represents a generic factor which ensures that jobs/tasks with a low score do not languish in the queue and never get processed. It is an exponentially valued factor based upon a variable x that reflects the number of times the score for that job/task has been re-calculated and is of the form $e^x$.

Configuration for a Particular "Customer"

Once the system has been configured as described above, a system administrator can then configure each individual customer who wishes to use the system. In this regard, the term "customer" is used to describe an entity that will submit requests for performance of work. This may include legal entities requesting execution of computer programs, logical entities such as computer processes or physical entities such as human beings requesting performance of particular work such as manufacturing in the industrial process example.
Using an administration portal, as shown in Figure 2, the required values for a new software application to be executed on the grid system are entered as described below.
At initial customer engagement but prior to any interaction with the system:

1. Define an initial value for attribute S9 (table 1) from the Service Provider perspective (with or without customer involvement).
2. Customer identifies the initial set of "applications" that the Grid is required to run once his portal has been established.
3. Through a series of logical "Create New Applications" requests put each application (in conjunction with the customer) through the "on-boarding" mechanism described below and produce:

   1. The run-time parameters required generically.
   2. The terms of each SLA required by the customer categorised by the attribute "Class".

3. Define the remaining attributes (S2 - S7) for each per Class.

4. Store the results in the PE dynamic repository (within the attribute mechanism of Figure 1).

4. Create a set of alternative Profiles for each Class SLA.

5. Define any of the remaining attributes S8 - S18 that are required.

The Administrator portal illustrated in figure 2 enables the Service Providers administration staff to create and manage the Utility Services Platform in its entirety. However the critical management operation that the invention of "profiles" together with the creation of the Grid-State database benefits is the on-boarding mechanism.

In response to a "Create New Application" request from a customer or SP admin to add a new application to the grid, an on-boarding mechanism is run to create the operational information necessary to run the application to the requirements specified within the request and agreed by the SP.

This operational information is used to populate the appropriate parts of the Customer Portal and the Policy Engine and is created through the use of the sandbox facility. It generates the specific compute requirements clearly identifying the server types and capabilities required such as throughput, hardware types, OS support, VM support, CPU utilisation, memory requirements. In addition the specific storage and database requirements clearly identifying the type of storage and capabilities required such as I/O requirements, TPS requirements, Virtual storage support are identified.

Any Network requirements, such as isolated fire-walled areas or dedicated areas per application, operational characteristics such as frequency of runs, number of simultaneous users, predictability of demand are also identified along with any licensing requirements such as the number of simultaneous licenses required.

An analysis and benchmarking exercise is then undertaken to produce the new SLAs utilising the data created from the sandbox exercise and the customer's stated performance requirements, which are likely to vary for the same application by time intervals of hour/day/month. It is then possible to agree the terms of the SLAs, including performance penalties and then to structure them into a set of accessible parameters. The analysis of this operational information is used to create and agree appropriate runtime metrics (profiles), in particular the scaling rules required to meet the terms of the SLAs.

Conventionally this information is utilised to create a set of resource provisioning instructions which is enacted across the grid. Typically they include some simple policies that will be enacted which can add or reduce resources to meet varying demand or failures.

However these provisioning instructions cannot provide for the wholesale re-provisioning of the grid resources that would be required to quickly move the application to other areas of the grid when required for operational reasons. This is because there is no information available in conventional grid platforms which details in real time what resources are available for provisioning or re-purposing to meet the needs of the application. The invention of the Grid-State database, detailed below in the PE section, provides this real-time information such that it is possible to assess the options available to move an application to other parts of the grid without disrupting other applications running within it.

Access to this information then allows for the invention of a series of alternative provisioning profiles, which meet the run-time requirements identified for each SLA to be created. By assessing the capabilities and availability of every component within the grid, each of these numbered profiles specifies the location within the Grid in terms of geographic site and sub-grid areas that can be employed to run the application. The scoring mechanism provides the priority for each request to move to an identified profile and the Policy Engine uses these scores and those of other applications that may be utilising some or all of the compute assets required to decide on which of the profiles stored within its dynamic repository to enact.

In the example of grid management, a customer may wish to configure a particular software application to be executable and may select up to five different sets of attribute values by which that application may be executed, named by each of the different customer class attributes, namely copper, bronze, silver, gold or platinum. Referring to Table 1, the customer may select, for example, a customer class of bronze for a particular application and the remaining attribute values will be defined either by the customer or the service provider, including the resource requirements, namely the profile attribute S15. In this way, when submitting a work request, the customer simply specifies who they are, the application to be executed and the name of the set of attribute values to be used (for example, "bronze"). From this submission, the prestored set of attributes relating to "bronze" for that application allows the remaining attributes to be retrieved, including appropriate resource provisioning profiles. Having configured both the system as a whole and each set of attributes for each work request type that could be received for each customer, the system can then receive requests for work and use the scoring mechanism and resource provisioning profile system described briefly above.

Work Request Handling

The following steps are undertaken for each received work request or event:

1. Work Requests or Events that are submitted or triggered to the policy engine input have their attributes and policies identified in the dynamic repository table, as shown in the attribute mechanism of Figure 1.

2. Employ the Scoring Mechanism for each new work request into the scoring array to calculate the score and the new reference vector.

3. Input the new work request with policies and score into the queue.

4. Process the queue through evaluation pod and work request pod of the GME.

5. When contention is reported engage the score-based analysis (described below).

6. Using GridState identify the assets involved and their current status.

7. If the assets are "Failed" or "In transit" then re-submit the work request with the Profile increased by one. Note that the score will only alter if Admin has requested a change.

8. If the assets are "Configured-Active" then compare scores of this work request with the existing work requests utilising these assets.

9. If the score of the new work request is greater than the existing, issue a "Move" request for the existing with it's Profile incremented by one to identify the new asset set required.

10. Submit the new work request back into the PE input and progress both as normal.

11. If the scores of both the work requests are the same submit both to the Value Optimiser for analysis of the individual attribute values by admin.

12. Re-submit the resultant work request tasks back into the PE as required and/or admin contact customer.

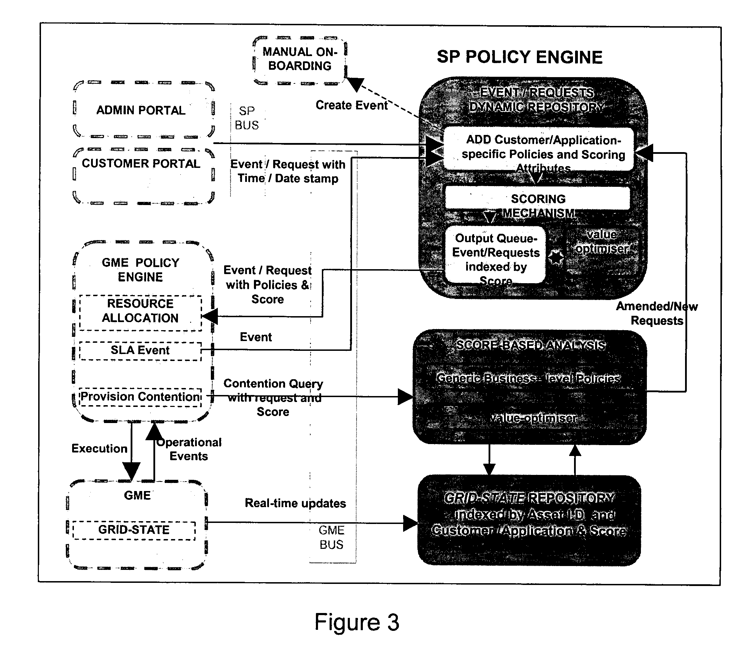

The policy engine illustrated in figure 3 provides the capability to manage the service delivery at the service level. An important feature of the embodiment that differentiates it from conventional control deployments is the intelligent, automatic performance management of an service such as a processing application to ensure that it fulfils the terms of an agreement in relation to the customer devices.

Conventional grid deployments imply that the customer can expect a certain level of performance but in reality it is not stated explicitly nor is it pro-actively managed. The embodiment delivers both of these since service levels are explicitly specified and the level of performance is automatically managed through the policy engine working in conjunction with the other framework components. The policy engine component is positioned at the top of the management stack and directs the performance management. It asserts control signals affecting the grid, especially those concerning resource allocations in terms of type, time and geographical location.

An important feature of the policy engine is that it incorporates two of the concepts, a scoring mechanism and a database Grid-State, to address and solve the problems that conventional approaches have with the management of performance in situations where simultaneous client service requests are submitted into the grid. These problems typically include but are not limited to:

Contention for resources during individual application provisioning
Dynamic re-purposing requirements of resources to meet individual service terms while taking into account the effect on the service levels of all requests
Prioritisation based upon the generic business-value of the customer to the Service Provider
Prioritisation based upon Penalty clause values for a wide range of SLAs by application and by customer
Dynamic management based upon the current and predicted load on the grid resources
Dynamic management of the individual applications based upon their runtime completion profiles

Firstly it provides a mechanism that prioritises each client service request in a novel manner which is highly efficient and recursive, taking into account the previous requests that have been received but not yet processed plus the effect of those that have been processed and are operational.

Secondly it provides a data base, Grid-State, which contains a real-time view of every resource in the grid and its operational state together with detailed information on relationships with other resources. In addition it contains the details of the job it is processing including the customer identity, the application and the associated score for that job against the resource(s) being employed.

Another key feature of the policy engine is that it incorporates "value optimisers" which uniquely allow for Policies to be programmatically amended reflecting the optimum response to any service requests, from the business perspective.

An additional feature of the network-centric aspect of the embodiment, when compared to those of conventional grids, is that it can combine the virtualisation and control of IT resources with that of the network connectivity through the use of Adaptive Network techniques. For example, an application may have a need to use the computing resources in a number of geographically dispersed data centres. Through the policy engine the embodiment provides the ability to prioritise the use of the resources in each data centre for that application as well as prioritisation of the use of the network connections between them.

The Policy Engine directs the management of the network typically by manipulating bandwidth, re-directing traffic and employing Application-defined QOS. Crucially, it does not undertake these actions in isolation of the current service usage of these network assets, instead it assesses them all in a holistic fashion before taking any actions itself.

The prime purpose of the Policy Engine (PE) is to provide high-level control instructions into the Grid Engine to intelligently manipulate resources within the Grid. These controls can provide the ability to offer Managed Grid Services to customers backed up by Application-level Service Level Agreements.

The fundamental tenet is that with the PE working in conjunction with the GE, all manipulation of Grid assets will be undertaken in a "push" model as opposed to the conventional "pull" model where resources take jobs and tasks from a queue. This conventional "pull" model results in resources operating quasi-autonomously since they can take on work that aligns with their capabilities independently of other demands that may arise that they are better suited to meet.

The "push" model that this invention provides will allow a service provider to intelligently decide where and how to run applications in the Grid pool of assets in response to a customer's agreed requirements by forcing work to be processed in specific areas of the grid.

The policy engine will provide control instructions to the Grid Engine (GE) to meet the terms of an SLA based upon the logically summed evaluation of the following variables:

Execution Requests

Relevant Policies for each Customer & Application and the overarching business policies
Current & Historical demands on the Grid fabric (contained within the database Grid-State)
Mediation instructions from a Value Optimiser

These control instructions will be applied in each of the following cases:

Allocation of resources for transactional applications on initial submission
Allocation of resources for transactional applications on re-scheduling
Allocation of resources for computational applications on a Task / Job basis from start-up to completion
In response to execution events
In response to administration instructions
Interconnect requirements in terms of Bandwidth and QoS between Grid assets
Network administration

The policy engine will store the following sets of information to allow the control instructions to be derived from summed evaluations of the information:

Top-level business policies
Policies Indexed by individual customer
Policies Indexed by application
Policies Modifiable by value optimisers
Grid assets by current capabilities
Grid assets by current status
Grid assets by current allocations
Network connectivity by current capabilities
Network connectivity by current status
All SLA information defined above

The basic tenet of a "Policy" is that it contains a set of actions that are to be applied to specific targets. These actions are undertaken dependant upon the result of the evaluation of the policy in response to an "event" trigger. If the event triggers a policy and the condition within it holds true then the resulting action from the set is sent into the Grid Engine for execution with an associated score that dictates the relative priority of the action.

The suite of policies contained within the Policy Engine encompasses the following groups:

Those required at the Application level
Those required by the customer devices
Those required by system as a whole at the business level
Those required within the Policy Engine itself to deal with internal events

These four groups of policies will ensure that decisions can be made that reflect the actions that the Service Provider requires the Grid Engine to take in response to an event being reported to the Policy Engine.

All requests for executable actions are characterised as Events or Tasks and will result in a policy being evaluated which in turn results in an operational action that is submitted for execution. In order that the output of the evaluation of the policies can be acted upon, a mechanism is required that will provide an assessment across all relevant outputs.

This mechanism must take into account a wide number of variables that would conventionally be defined within a string of Boolean algebraic terms, the result of which would be an action dependent upon the logical summation of these terms. However as the number of variables increases in response to an increasing load and complexity of application tasks, the Boolean analysis begins to become unworkable both in length and execution time.

The embodiment of the invention is based upon 2-part approach that has been developed to simplify this problem. The first part consists of employing a scoring mechanism framework that has been developed for the policy engine. Scores for tasks/events will be assessed according to a set of attributes associated with that task/event and agreed terms and will provide a base numerical score.

The second part of the approach utilises those base numerical scores within an event matrix that is evaluated using a branch of mathematics known as Eigenvectors that will provide prioritisation values for each event. This provides a relative score and prioritisation ranking for each event against each other and against a mean vector for the matrix.

Score based analysis

We will now explain the mechanism to obtain the base score for the event based on the attribute set defined in the above section. As mentioned above the base numerical scores cannot be used for prioritisation purposes as they will not reflect the relative value of numerical values obtained from different attributes. That is to say a value of 100 for example obtained from S1 is not the same as a value of 100 obtained from say S16.

The Policy engine will take actions based on the relative scores and priorities. The events are classified into three categories:

Customer portal events: These are events/requests generated by customers when they make request to the policy engine/grid.
Business and admin events/requests: These are events submitted by SP administrators.
Policy engine events: These are events generated by the policy engine.

Table 2, Table 3, and Table 4 show the definition of the policy for identified types of events and the attributes required to calculate the base numerical score for each event.

The embodiment of invention calculates the relative scores by employing an approach based on Eigenvectors providing the benefit of being able to take into account the relative values of the component parts that gave rise to the base numerical value.

Each of these events can be considered a multi-dimensional vector which represents that particular event within an Eigenspace comprising of vectors that represent all the known events that the system is capable of dealing with. The relative value (distance) of each vector to the system Mean Vector will provide the basis for the score of that event. This value can be calculated using the standard formula for this measurement which is the differences for each attribute between the event vector and the Mean Vector, thus:-

$$RV = \Sigma \ \sqrt{(a^2 - b^2)}$$

where a represents the Event Mean Vector array of values and b the reference Standard Deviation vector array.

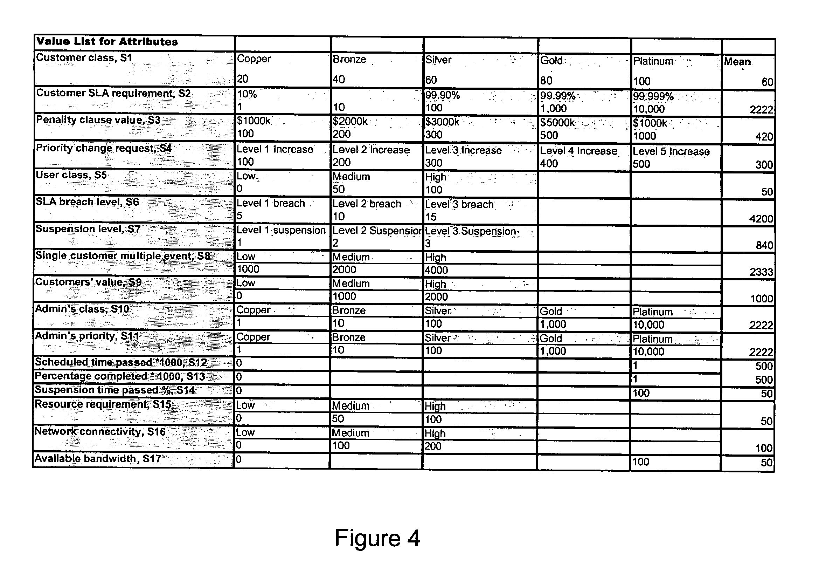

For this calculation to be valid every vector must have the mean value of each attribute it is comprised of entered into the matrix and overall precisely the same number of dimensions (attributes). This means that a zero needs to be entered in the matrix for null values of attributes. The mean values for each attribute are shown in Figure 4.

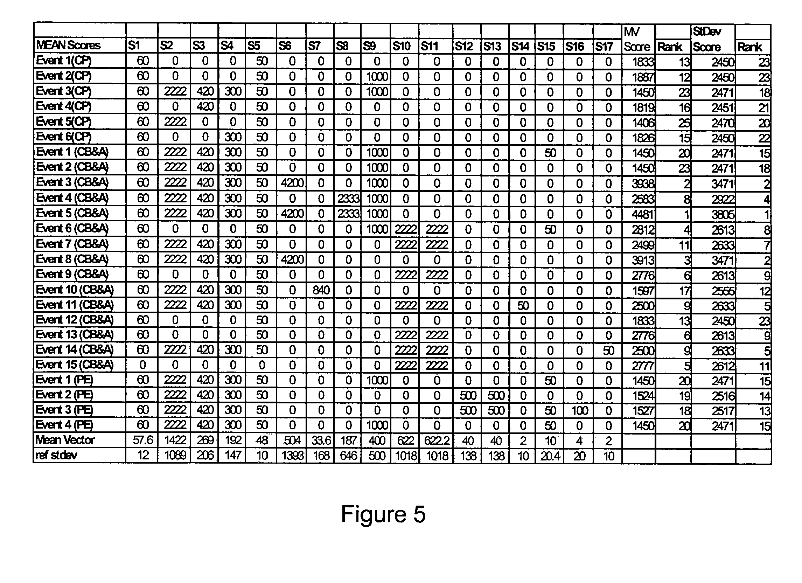

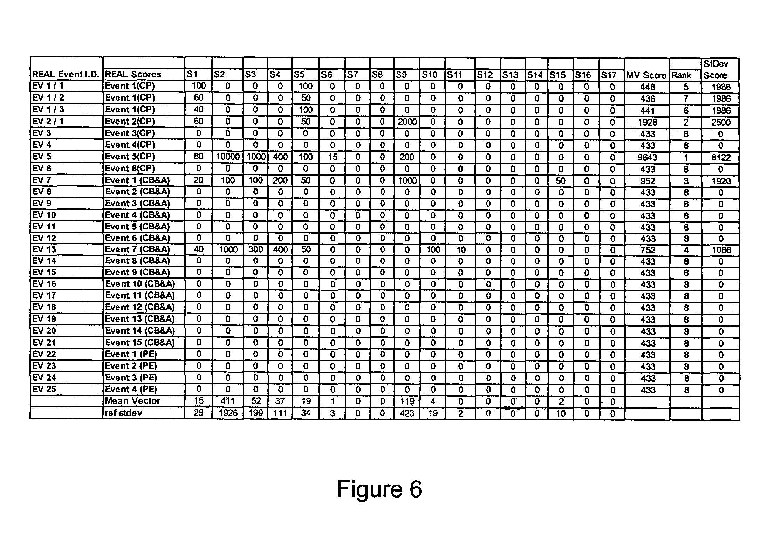

Thus, if every possible event is entered into a matrix consisting of the attributes S1 to S17 it is possible to calculate the Mean Vector (MV), as shown in figure 5, below, and the MV score for each event together with its rank. This calculation can also be derived against the Mean Vector Standard Deviation which normalises the range of vectors which is an important refinement as shown in Figure 6.

This refinement is required since the calculation of the distance between the event vector and the system mean vector does not provide a meaningful value when there are any entirely null vectors present as shown in figure 5. In this situation the null vectors are ranked higher than real event vectors which would preclude the use of ranking values in deciding priorities.

This corresponds to the situation where the range of events being scored do not comprise the full suite of possible events, which is expected to be the norm the majority of the time. Thus the absolute value of the event score and its relative rank or priority is derived from the normalised Mean Vector comprising of the Standard Deviation attribute values.

The resultant score and priority ranking are re-calculated holistically and recursively across all events that are awaiting execution each time a new event arrives for scoring. Once an event is executed it will be deleted from the REAL event matrix and replaced by a null vector.

The matrix is infinitely expandable in that multiple copies of any particular event can be entered with their individual attributes values provided that a unique identifier for that event is retained within the matrix.

The mechanism described above may result in some low-scoring event becoming trapped in the queue through the constant arrival of higher-scoring events. To ensure that this does not persist a simple refinement has been created which will ensure that the score for these events is improved each time a new event arrives.

To achieve this the final Std Dev score for those events will be multiplied by the factor $e^x$ every time the score is re-calculated due to a new event entry where $X$ = number of times the score has been re-calculated for that event. This will ensure that the lowest scoring events will eventually out-score any new event and will be processed by the system.

The invention of the Policy Engine database Grid-State provides a holistic view in real-time of the state of the entire grid that can be employed to make intelligent decisions that will ensure that the customers receive their contracted level of service whilst the Service Provider maximises the efficiency and return on assets employed.

The data required to populate this database will be provided through the exploitation of the fundamental capability of the third party GME, referred to above, to deploy software "agents" into the resources comprising the grid fabric. This intelligent software "Agent" that is automatically downloaded on installation of the GME to every node, physical and/ or virtual in the grid fabric will provide the initial and subsequent topologies of the grid fabric that the PE has at its disposal from which it can deliver services to customers.

This Agent will be capable of the following actions:

Auto-Establishment of the Agent's own unique identity with the GME itself
Auto-Discovery of the target grid resource component and its attributes, properties and dependencies which will typically include but are not limited to:

type,
identity,
composition,
general performance capabilities,
scalability,
network connections (internal and external),
reliability
security characteristics

In addition the relationship and bindings between elemental components that are used to form combinations to create a higher-level grid component (for example a Web Server Tier or Persistent Storage Tier) will be established by the GME. All of this information will be stored in a relational database from which the Policy Engine database Grid-State will be populated and which will be capable of being interrogated and updated in real-time.

This database will contain this information for every resource within the entire grid fabric, including but not limited to the following components:

Physical Servers
The physical server itself
The VMs that are deployed on the physical server
Virtual Machines - VMs
The physical servers they are parented on
The type of hypervisor employed
The VMMs that are managing the VMs plus the Live Migration mechanism
The VM file system employed and the physical/virtual storage it aligns with
VM back-up system and the physical/virtual storage it aligns with
Sub-grids areas
Areas of the grid fabric that have been isolated from the rest of the grid through VLAN installations and set-ups
Areas of the grid fabric that have been isolated from the rest of the grid through an Agent-Identity based group restriction

Physical Storage

Dedicated storage - disks, memory etc
Shared storage - SAN, NAS
RAID structures and groups

Virtual storage

LUNs and the relationship between each
LUNs and the physical storage aligned with each
SAN zones and LUN and Masks

Network connectivity

Physical connections topology
Virtual connections topologies and relationship with physical for each
Network connectivity management devices

Component status

Every component in the database must be assigned a Current Status entry depending upon its state which may be one of the following:

Un-configured
Configured Inactive
Configured Active
Failed

An outline of the Grid State database is illustrated in the table below and shows the remaining information table areas, e.g. Customer/Application and Score/Rank, that will be populated by two other GME management threads that are detailed below in the GME section.

| | details | GME AGENT i.d. | GME AGENT geographic LOCATION | SUB-GRID identity | CUSTOME R /APPLICATION /PROFILE | CURRENT STATUS | assigned SCORE/ RANK |
|---|---|---|---|---|---|---|---|
| PHYSICAL SERVER | | | | | | | |
| VIRTUAL SERVER | | | | | | | |
| PHYSICAL STORAGE | | | | | | | |
| VIRTUAL STORAGE | | | | | | | |
| PHYSICAL NETWORK CONNECTION | | | | | | | |

(continued)

| | details | GME AGENT i.d. | GME AGENT geographic LOCATION | SUB-GRID identity | CUSTOME R /APPLICATION /PROFILE | CURRENT STATUS | assigned SCORE/ RANK |
|---|---|---|---|---|---|---|---|
| VIRTUAL NETWORK CONNECTION | | | | | | | |
| COMBINATIONS-PHYSICALS | | | | | | | |
| COMBINATIONS-VIRTUAL | | | | | | | |

The invention of the Grid-State database also provides another significant benefit over the conventional methods employed of utilising the virtualisation capabilities of third party software applied to computing servers and storage. These third party suppliers of virtualisation technology have been supplying this software as a "hypervisor" which virtualises the physical server it is loaded onto such that a number of Virtual Machines (VM) can be created from this single machine, each of which functions as a server in its own right.

Conventionally each physical server is equipped with approximately 8 to 10 VMs to allow for the limitations of computational power and I/O capabilities of the physical machine. However under the control of the Policy Engine and by reference to the Grid State database it will be possible to equip each physical server with hundreds of VMs, each loaded with a software container since the PE will ensure that any combination of VMs that are activated do not exceed the available compute and I/O capability remaining on the associated physical machine.

In this way it will be possible to pre-provision multiple instances of application software across the entire Grid which can be activated wherever the capability is available. Similarly the virtualisation of the storage volumes afforded by existing third party products will provide the ability to pre-provision virtual volumes to coincide with the VMs. This will allow the full exploitation of the VMs which typically are restricted by the very dense I/O requirements. The benefits that this invention provides in this scenario are substantial and will revolutionise the response rate of application provisioning and re-purposing requests in terms of the volume of capacity made available and the reduction in the delays incurred over conventional responses.

Contention Mechanism

This function will accept input tasks from the GME Policy Engine function that has identified that a Provision request from the PE queue has encountered contention and is seeking resolution. The contention notification will be triggered by the GMPE forwarding the original event/request plus its associated score received from the GME. The PE analysis mechanism will seek resolution by accessing the Grid-state database and undertaking a series of steps that will resolve the contention, in conjunction with the Value Optimiser if necessary.

The invention of the Grid-State database and the score-based priority for each contending request, together with the use of the Profiles created during the on-boarding process will greatly benefit the speed and accuracy of this resolution. Together they will provide the SP with the ability to very rapidly assess the "value" of each contender and make a business-level decision on which to move and to where in the grid. In addition the knock-on effect of such a move will be automatically identified and assessed as each move is processed with each task being analysed using the score associated with it when it was first provisioned.

A typical set of steps are included below for the sake of clarity.

1. Access the current version of the "Grid State" database.

2. Identify the asset types that the provisioning request was seeking to use and establish their status from the "Current State" entry. If they are marked as "Configured - Active" proceed to step 3. If they are marked as "In Transit" then proceed to step 6. If they are marked as "Failed" then proceed to step 8.

3. Compare in turn the score associated with each identified asset against the score of the provisioning task.

4. Where the score of the provisioning task is greater than that associated with the current usage generate a "Move Application" request for the current usage application. The request details will be extracted from the relevant "Grid State" entry with the profile number incremented by one (note that this does not increase the score) to select the next version of the agreed provisioning set up. The profile details will be available in the PE Dynamic Repository. Where the score of the provisioning task is less than current go to step 8.

5. Submit the Move request with the new higher-profile attribute into the PE input process as shown in figure 4 above.

6. Submit the original Provision request that was received in the contention notification into the PE input process as shown in figure 4 above

7. Where the score values of the requesting task and the current task are identical submit the two tasks into the Value Optimiser for analysis of value metrics, which will be defined and updated by Admin.

8. If the current running application is deemed more valuable (either from the result of the Value Optimiser analysis or from a lower score) than the application generating the Provision request (that was received in the contention notification) then this request will be sent into the PE input process with the profile number incremented by one. Otherwise the steps 4, 5 and 6 above will be followed.

Example Work Request

For completeness, an example work request will now be described for a complete understanding. Referring first to Figure 1, a customer may choose to submit a work request, such as execute Application "A", using the set of attributes identified by customer class "silver". A message at input 12 is then generated identifying the customer, the application to be executed and the customer class value "silver". The attribute mechanism then refers to the prestored table of customer portal events, shown in Table 2 and determines that the request is to start an application and therefore, a score is calculated based on attribute values S1, S2, S3, S4, S5 and S9 retrieved from the prestored attribute sets. One of the attributes retrieved is the initial run-time parameters or profile that should be used for execution of the application.

The queue mechanism in Figure 1 then refers to Table 2 to determine which attributes are used in the calculation of the score, in this case as it is a start application event, attributes S1-S5 and S9 are used in calculating the score. Taking the example above, and referring to Figure 5, we can see that event 3 is a customer portal event for requesting start of an application and attribute values S1-S5 and S9 are used in determining the score. When the work request becomes the request with the highest score, it is passed to the work request pool for execution. If there is a contention for resources, then the scoring mechanism described above is used.

Alternative aspects

The invention may also be implemented as a method comprising receiving work requests for performance of tasks by a finite pool of heterogeneous resources, determining the value of each of multiple attributes for each work request, calculating, by considering each request as a multi-dimensional eigenvector, the relative distance of each eigenvector in relation to a reference eigenvector; asserting the requests in a priority order determined by the relative distance of each eigenvector. The method may be implemented in a dedicated hardware system or as software as discussed above.

## Annex

## Table 1 Definition of attributes

| Attributes | Symbol | List of Available Values | | | | |
|---|---|---|---|---|---|---|
| Customer Class (5 classes) | S1 | Copper | Bronze | Silver | Gold | Platinum |
| | | 20 | 40 | 60 | 80 | 100 |
| Customer SLA Requirement per application (Percentile) | S2 | 10% | ... | 99.9% | 99.99% | 99.999% |
| | | 1 | ... | 100 | 1,000 | 10,000 |
| Penalty Clauses per application (proportional to $ of penalty and contract size) | S3 | $1000K | $2000K | $3000K | ... | $10,000K |
| | | 100 | 200 | 300 | ... | 1000 |
| Priority change request from customer during run-time | S4 | Level 1 Increase | Level 2 Increase | Level 3 Increase | Level 4 Increase | Level 5 Increase |
| | | 100 | 200 | 300 | 400 | 500 |
| User Class (Associated privileges) | S5 | Low | Medium | High | | |
| | | 0 | 50 | 100 | | |
| SLA breach level | S6 | Level 1 breach | Level 2 breach | Level 3 breach | | |
| | | 5*S3 | 10*S3 | 15*S3 | | |
| Suspension Level (time) | S7 | Level 1 suspension | Level 2 Suspension | Level 3 Suspension | | |
| | | 1*S3 | 2*S3 | 3*S3 | | |
| Multiple events for single customer | S8 | Low | Medium | High | | |
| | | 1000 | 2000 | 4000 | | |
| Customers' Value | S9 | The score will take into consideration annual revenue generated by the customer, strength of relationship with customer, total contract amount with COLT and future revenue-generation potential. The score has a range from 0 to 2000 | | | | |
| | | Define 3 levels of customer value (Low=0, Medium=1000, High=2000) | | | | |
| Administrator class. | S10 | Copper | Bronze | Silver | Gold | Platinum |
| | | 1 | 10 | 100 | 1,000 | 10,000 |
| Request from Admin | S11 | S11<S10 | | | | |
| Percentages of initially scheduled execution time passed | S12 | S12 = 1000 * Percentage of initially allocated time passed | | | | |

| Percentage of task completed | S13 | S13 = 1000 * (1- Percentage of task completed) |
|---|---|---|
| Percentage of planned suspension time has passed | S14 | S14=100* Percentage of planned suspension time passed |
| Resource requirements for application "Profile" | S15 | S15 is proportional to Resource requirements for the application Profile. Higher values of Profiles<br>Define 3 levels of resource requirement (Low=0, Medium=50, High=100); |
| Network connectivity requirements | S16 | Define 3 levels of network connectivity requirements.<br>Low=0, Medium=100, High=200. |
| Current available bandwidth | S17 | S17 value will be proportional to the percentage of available bandwidth.<br>S17 = 100* percentage of available bandwidth. |
| Priority improvement factor | S18 | Score = Re-calculated score * $e^x$ where X = re-calculation count |

## Table 2 Scoring Mechanism for Customer Portal Events

| | Events/Tasks | Attributes to calculate score | Policy actions to take |
|---|---|---|---|
| 1 | Log-in system | 1. Collect information on customer class (S1) and user class (S5);<br>2. Authenticate the user's information.<br>3. IF authentication is True, calculate the score from S1 and S5 by addition, S=S1+S5; Otherwise, S=0; | Authenticate user's information and let the customer log in to the system if True. |
| 2 | Create a New Application / SLA | 1. Collect information on the S1 &S5.<br>2. Evaluate customer's value.<br>3. Calculate the score: S=S1+S5+S9; | Instigate a Professional Services activity within COLT. (Admin to allocate resource corresponding to the chosen Profile to create new application). |
| 3 | Start Application | 1. Collect information on the S1 to S5, and S9.<br>2. Calculate the score: S=S1+S2+S3+S4+S5+S9; | Allocate and start required resource based on score for that application. |
| 4 | View Application Status / Generate Report including Billing | 1. Collect information on the S1, S3, and S5.<br>2. Calculate the score: S=S1+S3+S5; | If the score has high enough priority, generate report on application status for customers. |

## Table 2 Scoring Mechanism for Customer Portal Events

| | Events/Tasks | Attributes to calculate score | Policy actions to take |
|---|---|---|---|
| 1 | Log-in system | 1. Collect information on customer class (S1) and user class (S5);<br>2. Authenticate the user's information.<br>3. IF authentication is True, calculate the score from S1 and S5 by addition, S=S1+S5; Otherwise, S=0; | Authenticate user's information and let the customer log in to the system if True. |
| 2 | Create a New Application / SLA | 1. Collect information on the S1 &S5.<br>2. Evaluate customer's value.<br>3. Calculate the score: S=S1+S5+S9; | Instigate a Professional Services activity within COLT. (Admin to allocate resource corresponding to the chosen Profile to create new application). |
| 3 | Start Application | 1. Collect information on the S1 to S5, and S9.<br>2. Calculate the score: S=S1+S2+S3+S4+S5+S9; | Allocate and start required resource based on score for that application. |
| 4 | View Application Status / Generate Report including Billing | 1. Collect information on the S1, S3, and S5.<br>2. Calculate the score: S=S1+S3+S5; | If the score has high enough priority, generate report on application status for customers. |

## Table 3 Scoring Mechanism for Business & Admin Events

| | Events/Tasks | Attributes to calculate the score | Policy actions |
|---|---|---|---|
| 1 | Move application (Admin ONLY) | 1. Evaluate the score from S1- S5; 2. Consider customer's value from the score S9 3. Consider Profile score from S15 4.Calculate the score: S=S1+S2+S3+S4+S5+S9+S15; | Move application to next Profile allocation from on-boarding process and launch a new Start Application request with the score increased by the value of S15 |
| 2 | Single Application SLA in Jeopardy | Evaluate the score from S1- S5; Consider customer's value from the score S9 Calculate the score: S=S1+S2+S3+S4+S5+S9; | Allocate the extra resources defined by type and amount during the on-boarding process to bring the SLA back into line. |
| 3 | Single Application SLA Breached | Consider the breach level (S6); Calculate the score: S=S1+S2+S3+S4+S5+S6+S9; | Depending on the score, which takes into consideration the level of breach, determine which option is to the best interest of COLT: 1. Breach the SLA and pay penalty; 2. Add extra resource to the task to avoid next-level of SLA breach. |
| 4 | Multiple Customer-Application SLAs in Jeopardy | Treat as multiple single-application in jeopardy plus S8 additional attribute | Consider each task individually and decide how much extra resource needs to be allocated for each individual application based |

| | | | on the score for that application. |
|---|---|---|---|
| 5 | Multiple Customer-Application SLAs Breached | Treat as multiple single-application breach plus S8 additional attribute | Decide for each application which option is in the best interest of COLT and how much extra resource to allocate. |
| 6 | Provision New Application / SLA | 1. Evaluate customer and user class and customer value, S1, S5, & S9;<br>2. Evaluate Admin class and request, S10 & S11;<br>3. Resource requirement for the new application, S15.<br>4. S=S1+S5+S9+S10+S11+S15; | Allocate and start required resource based on score for that application plus Admin request score. |
| 7 | Start Application request | 1. Collect information on the S1 and S5;<br>2. Consider the request from users, S2, S3, & S4;<br>3. Consider Admin's class and Admin's request, S10 & S11;<br>4. Calculate the score: S=S1+S2+S3+S4+S5+S10+S11 | Decide whether to start application and how much resource will be allocated depending upon this score relative to all others already running in the Grid. |
| 8 | Stop application request | 1. In this event, the SLA will be breached at highest level, L3, determine the value for S6(L3);<br>2. Calculate the score: S=S1+S2+S3+S4+S5+S6; | If Admin requests application to be stopped, SLA will be breached at L3. The request should be evaluated to determine if it is in the best interest of COLT to execute. |
| 9 | View Application Status / Generate Report | 1. Collect customer info S1 & S5.<br>2. Evaluate Admin's class and request, S10 & S11;<br>3. S=S1+S5+S10+S11; | If the score has high enough priority, generate report on application status for customers. |
| 10 | Suspend application request | 1. Consider the suspension level and the score for S7;<br>2. Calculate the score: S=S1+S2+S3+S4+S5+S7; | Depending on the suspension level, evaluate from the score if the suspension is in the best interest of COLT. |
| 11 | Resume application request | 1. Evaluate S1-S5;<br>2. Consider Admin's class and request, S10 &S11;<br>3. Application's suspension status from S14; | Make a decision on whether the application should be resumed. If so, how much resource |

| | | 4. Calculate the score:<br>S=S1+S2+S3+S4+S5+S10+S11+S14 | is to be allocated by taking into consideration the suspension status, Admin's class and request. |
|---|---|---|---|
| 12 | Delete application | The system contains an application that the customer agrees to delete, the score is: S=S1+S5; | Delete the application |
| 13 | Modify application SLA terms | Evaluate customer class and user class, S1 & S5;<br>Evaluate Admin class and request, S10 & S11;<br>S=S1+S5+S10+S11; | Determine if and how much resource should be allocated based on Customer and Admin's info. |
| 14 | Modify network connections request | Evaluate from S1 to S5, i.e. current running application's score.<br>Evaluate Admin class and request, S10 & S11;<br>Consider available bandwidth, S17;<br>S=S1+S2+S3+S4+S5+S10+S11+S17; | Determine if the resource should be allocated to modify network connection. |
| 15 | List Application running request | Evaluate Admin class and request, S10 & S11;<br>S=S10+S11; | Allocate resource to perform Admin's request. |

## Table 4 Scoring Mechanism for Policy Engine Events

| | Events/Tasks | Attributes to calculate the score | Policy actions to take |
|---|---|---|---|
| Policy Engine Events | | | |
| 1 | Move Application | 1. Get the score from the current GRID-STATE entry as for event 1 CB&A | Move to next highest Profile requirements |
| 2 | Application over-resourced | 2. Evaluate customer info from S1-S5. 3. Evaluate application execution state from S12 & S13. 4. S=S1+S2+S3+S4+S5+S12+S13; | Determine if over-resourced. If so determine whether to reduce allocation or not. |
| 3 | Application under-resourced | 1. Evaluate customer info from S1-S5. 2. Evaluate application execution state from S12 & S13. 3. Consider the resource requirement, S15 + S16. 4. S=S1+S2+S3+S4+S5+S12+S13+S 15+S16. | Determine if under-resourced. If so, allocate more resource. |
| 4 | System failure | Evaluate all applications' scores from S1 - S5 & S9 & S15 to determine what actions are appropriate. | Determine what actions are appropriate. |

## Claims

1. A work request control system for receiving work requests from input devices for performance of tasks by a finite pool of heterogeneous resources, comprising:

   an input for receiving work requests from input devices;
   an attribute mechanism arranged to receive the work requests arranged to determine the value of each of multiple attributes for each work request;
   a queue mechanism arranged to receive each work request and the values of each of the multiple attributes and arranged to calculate, by considering each request as a multi-dimensional eigenvector, the relative distance of each eigenvector in relation to a reference eigenvector; and
   an output arranged to assert the requests in a priority order determined by the relative distance of each eigenvector.

2. A work request control system according to claim 1, wherein the reference eigenvector is the standard deviation mean vector of requests in the queue mechanism.

3. A work request control system according to claim 1 or 2, wherein the queue mechanism further comprises a work request pool for storing information on work requests being executed by resources and the output is arranged to assert the work requests in priority order to the work request pool.

4. A work request control mechanism according to claim 3, wherein the queue mechanism comprises an evaluation pool having the output arranged to assert work requests to the work request pool.

5. A work request control system according to claim 4, wherein the work request pool is arranged to return a work request to the evaluation pool if appropriate resources are unavailable.

**6.** A work request control system according to claim 5, wherein a work request for given resources received with a higher priority will displace back to the evaluation pool a work request being executed having a lower priority and contending for the given resources.

**7.** A work request control system according to claim 5, wherein a work request for given resources received with a lower priority will be returned to the evaluation pool if a work request being executed having a higher priority is using the given resources.

**8.** A work request control system according to any of claims 4 to 7, wherein the queue mechanism is arranged to recalculate the relative distance of each eigenvector when each work request is received at the evaluation pool.

**9.** A work request control system according to any of claims 4 to 8, wherein the queue mechanism is arranged to use an improved attribute value in the calculation of the relative distance for a work request that has been forced from the work request pool.

**10.** A work request control system according to any preceding claim, wherein the attribute mechanism is arranged to determine the values of the attributes according to pre-stored attribute sets.

**11.** A work request control system according to claim 10, wherein the attribute mechanism is arranged to determine the values of the attributes based on the nature of the work request, an identifier of a requestor and at least one indicator of a performance level required.

**12.** A work request control system according to claim 11, wherein the indicator of the performance level required is itself one of the attributes.

**13.** A work request control system according to any preceding claim, further comprising a profile mechanism for determining the execution parameters of each work request.

**14.** A work request control system according to claim 13, wherein the profile selected for a given work request depends upon a choice selected at the input devices.

**15.** A work request control system according to claim 14, wherein the choice selected is an indicator of a performance level required.

**16.** A work request control system according to claim 14, wherein an alternative profile is determined for a work request in the event that the work request cannot be executed due to a resource contention.

**17.** A work request control system according to any preceding claim, wherein the calculation of relative distance produces a score for each work request and the scores of requests in the queue mechanism are increased in response to new requests received at an evaluation pool.

Figure 1

Figure 2

Figure 3

EP 2 098 984 A1

| Value List for Attributes | | | | | | |
|---|---|---|---|---|---|---|
| Customer class, S1 | Copper | Bronze | Silver | Gold | Platinum | Mean |
| | 20 | 40 | 60 | 80 | 100 | 60 |
| Customer SLA requirement, S2 | 10% | | 99.90% | 99.99% | 99.999% | |
| | 1 | 10 | 100 | 1,000 | 10,000 | 2222 |
| Penalty clause value, S3 | $1000k | $2000k | $3000k | $5000k | $1000k | |
| | 100 | 200 | 300 | 500 | 1000 | 420 |
| Priority change request, S4 | Level 1 Increase | Level 2 Increase | Level 3 Increase | Level 4 Increase | Level 5 Increase | |
| | 100 | 200 | 300 | 400 | 500 | 300 |
| User class, S5 | Low | Medium | High | | | |
| | 0 | 50 | 100 | | | 50 |
| SLA breach level, S6 | Level 1 breach | Level 2 breach | Level 3 breach | | | |
| | 5 | 10 | 15 | | | 4200 |
| Suspension level, S7 | Level 1 suspension | Level 2 Suspension | Level 3 Suspension | | | |
| | 1 | 2 | 3 | | | 840 |
| Single customer multiple event, S8 | Low | Medium | High | | | |
| | 1000 | 2000 | 4000 | | | 2333 |
| Customers' value, S9 | Low | Medium | High | | | |
| | 0 | 1000 | 2000 | | | 1000 |
| Admin's class, S10 | Copper | Bronze | Silver | Gold | Platinum | |
| | 1 | 10 | 100 | 1,000 | 10,000 | 2222 |
| Admin's priority, S11 | Copper | Bronze | Silver | Gold | Platinum | |
| | 1 | 10 | 100 | 1,000 | 10,000 | 2222 |
| Scheduled time passed *1000, S12 | 0 | | | | 1 | 500 |
| Percentage completed *1000, S13 | 0 | | | | 1 | 500 |
| Suspension time passed %, S14 | 0 | | | | 100 | 50 |
| Resource requirement, S15 | Low | Medium | High | | | |
| | 0 | 50 | 100 | | | 50 |
| Network connectivity, S16 | Low | Medium | High | | | |
| | 0 | 100 | 200 | | | 100 |
| Available bandwidth, S17 | 0 | | | | 100 | 50 |

Figure 4

| MEAN Scores | S1 | S2 | S3 | S4 | S5 | S6 | S7 | S8 | S9 | S10 | S11 | S12 | S13 | S14 | S15 | S16 | S17 | MV Score | Rank | StDev Score | Rank |
|---|---|---|---|---|---|---|---|---|---|---|---|---|---|---|---|---|---|---|---|---|---|
| Event 1(CP) | 60 | 0 | 0 | 0 | 50 | 0 | 0 | 0 | 0 | 0 | 0 | 0 | 0 | 0 | 0 | 0 | 0 | 1833 | 13 | 2450 | 23 |
| Event 2(CP) | 60 | 0 | 0 | 0 | 50 | 0 | 0 | 0 | 1000 | 0 | 0 | 0 | 0 | 0 | 0 | 0 | 0 | 1887 | 12 | 2450 | 23 |
| Event 3(CP) | 60 | 2222 | 420 | 300 | 50 | 0 | 0 | 0 | 1000 | 0 | 0 | 0 | 0 | 0 | 0 | 0 | 0 | 1450 | 23 | 2471 | 18 |
| Event 4(CP) | 60 | 0 | 420 | 0 | 50 | 0 | 0 | 0 | 0 | 0 | 0 | 0 | 0 | 0 | 0 | 0 | 0 | 1819 | 16 | 2451 | 21 |
| Event 5(CP) | 60 | 2222 | 0 | 0 | 50 | 0 | 0 | 0 | 0 | 0 | 0 | 0 | 0 | 0 | 0 | 0 | 0 | 1406 | 25 | 2470 | 20 |
| Event 6(CP) | 60 | 0 | 0 | 300 | 50 | 0 | 0 | 0 | 0 | 0 | 0 | 0 | 0 | 0 | 0 | 0 | 0 | 1826 | 15 | 2450 | 22 |
| Event 1 (CB&A) | 60 | 2222 | 420 | 300 | 50 | 0 | 0 | 0 | 1000 | 0 | 0 | 0 | 0 | 0 | 50 | 0 | 0 | 1450 | 20 | 2471 | 15 |
| Event 2 (CB&A) | 60 | 2222 | 420 | 300 | 50 | 0 | 0 | 0 | 1000 | 0 | 0 | 0 | 0 | 0 | 0 | 0 | 0 | 1450 | 23 | 2471 | 18 |
| Event 3 (CB&A) | 60 | 2222 | 420 | 300 | 50 | 4200 | 0 | 0 | 1000 | 0 | 0 | 0 | 0 | 0 | 0 | 0 | 0 | 3938 | 2 | 3471 | 2 |
| Event 4 (CB&A) | 60 | 2222 | 420 | 300 | 50 | 0 | 0 | 2333 | 1000 | 0 | 0 | 0 | 0 | 0 | 0 | 0 | 0 | 2583 | 8 | 2922 | 4 |
| Event 5 (CB&A) | 60 | 2222 | 420 | 300 | 50 | 4200 | 0 | 2333 | 1000 | 0 | 0 | 0 | 0 | 0 | 0 | 0 | 0 | 4481 | 1 | 3805 | 1 |
| Event 6 (CB&A) | 60 | 0 | 0 | 0 | 50 | 0 | 0 | 0 | 1000 | 2222 | 2222 | 0 | 0 | 0 | 50 | 0 | 0 | 2812 | 4 | 2613 | 8 |
| Event 7 (CB&A) | 60 | 2222 | 420 | 300 | 50 | 0 | 0 | 0 | 0 | 2222 | 2222 | 0 | 0 | 0 | 0 | 0 | 0 | 2499 | 11 | 2633 | 7 |
| Event 8 (CB&A) | 60 | 2222 | 420 | 300 | 50 | 4200 | 0 | 0 | 0 | 0 | 0 | 0 | 0 | 0 | 0 | 0 | 0 | 3913 | 3 | 3471 | 2 |
| Event 9 (CB&A) | 60 | 0 | 0 | 0 | 50 | 0 | 0 | 0 | 0 | 2222 | 2222 | 0 | 0 | 0 | 0 | 0 | 0 | 2776 | 6 | 2613 | 9 |
| Event 10 (CB&A) | 60 | 2222 | 420 | 300 | 50 | 0 | 840 | 0 | 0 | 0 | 0 | 0 | 0 | 0 | 0 | 0 | 0 | 1597 | 17 | 2555 | 12 |
| Event 11 (CB&A) | 60 | 2222 | 420 | 300 | 50 | 0 | 0 | 0 | 0 | 2222 | 2222 | 0 | 0 | 50 | 0 | 0 | 0 | 2500 | 9 | 2633 | 5 |
| Event 12 (CB&A) | 60 | 0 | 0 | 0 | 50 | 0 | 0 | 0 | 0 | 0 | 0 | 0 | 0 | 0 | 0 | 0 | 0 | 1833 | 13 | 2450 | 23 |
| Event 13 (CB&A) | 60 | 0 | 0 | 0 | 50 | 0 | 0 | 0 | 0 | 2222 | 2222 | 0 | 0 | 0 | 0 | 0 | 0 | 2776 | 6 | 2613 | 9 |
| Event 14 (CB&A) | 60 | 2222 | 420 | 300 | 50 | 0 | 0 | 0 | 0 | 2222 | 2222 | 0 | 0 | 0 | 0 | 0 | 50 | 2500 | 9 | 2633 | 5 |
| Event 15 (CB&A) | 0 | 0 | 0 | 0 | 0 | 0 | 0 | 0 | 0 | 2222 | 2222 | 0 | 0 | 0 | 0 | 0 | 0 | 2777 | 5 | 2612 | 11 |
| Event 1 (PE) | 60 | 2222 | 420 | 300 | 50 | 0 | 0 | 0 | 1000 | 0 | 0 | 0 | 0 | 0 | 50 | 0 | 0 | 1450 | 20 | 2471 | 15 |
| Event 2 (PE) | 60 | 2222 | 420 | 300 | 50 | 0 | 0 | 0 | 0 | 0 | 0 | 500 | 500 | 0 | 0 | 0 | 0 | 1524 | 19 | 2516 | 14 |
| Event 3 (PE) | 60 | 2222 | 420 | 300 | 50 | 0 | 0 | 0 | 0 | 0 | 0 | 500 | 500 | 0 | 50 | 100 | 0 | 1527 | 18 | 2517 | 13 |
| Event 4 (PE) | 60 | 2222 | 420 | 300 | 50 | 0 | 0 | 0 | 1000 | 0 | 0 | 0 | 0 | 0 | 50 | 0 | 0 | 1450 | 20 | 2471 | 15 |
| Mean Vector | 57.6 | 1422 | 269 | 192 | 48 | 504 | 33.6 | 187 | 400 | 622 | 622.2 | 40 | 40 | 2 | 10 | 4 | 2 | | | | |
| ref stdev | 12 | 1089 | 206 | 147 | 10 | 1393 | 168 | 646 | 500 | 1018 | 1018 | 138 | 138 | 10 | 20.4 | 20 | 10 | | | | |

Figure 5

| REAL Event I.D. | REAL Scores | S1 | S2 | S3 | S4 | S5 | S6 | S7 | S8 | S9 | S10 | S11 | S12 | S13 | S14 | S15 | S16 | S17 | MV Score | Rank | StDev Score |
|---|---|---|---|---|---|---|---|---|---|---|---|---|---|---|---|---|---|---|---|---|---|
| EV 1 / 1 | Event 1(CP) | 100 | 0 | 0 | 0 | 100 | 0 | 0 | 0 | 0 | 0 | 0 | 0 | 0 | 0 | 0 | 0 | 0 | 448 | 5 | 1988 |
| EV 1 / 2 | Event 1(CP) | 60 | 0 | 0 | 0 | 50 | 0 | 0 | 0 | 0 | 0 | 0 | 0 | 0 | 0 | 0 | 0 | 0 | 436 | 7 | 1986 |
| EV 1 / 3 | Event 1(CP) | 40 | 0 | 0 | 0 | 100 | 0 | 0 | 0 | 0 | 0 | 0 | 0 | 0 | 0 | 0 | 0 | 0 | 441 | 6 | 1986 |
| EV 2 / 1 | Event 2(CP) | 60 | 0 | 0 | 0 | 50 | 0 | 0 | 0 | 2000 | 0 | 0 | 0 | 0 | 0 | 0 | 0 | 0 | 1928 | 2 | 2500 |
| EV 3 | Event 3(CP) | 0 | 0 | 0 | 0 | 0 | 0 | 0 | 0 | 0 | 0 | 0 | 0 | 0 | 0 | 0 | 0 | 0 | 433 | 8 | 0 |
| EV 4 | Event 4(CP) | 0 | 0 | 0 | 0 | 0 | 0 | 0 | 0 | 0 | 0 | 0 | 0 | 0 | 0 | 0 | 0 | 0 | 433 | 8 | 0 |
| EV 5 | Event 5(CP) | 80 | 10000 | 1000 | 400 | 100 | 15 | 0 | 0 | 200 | 0 | 0 | 0 | 0 | 0 | 0 | 0 | 0 | 9643 | 1 | 8122 |
| EV 6 | Event 6(CP) | 0 | 0 | 0 | 0 | 0 | 0 | 0 | 0 | 0 | 0 | 0 | 0 | 0 | 0 | 0 | 0 | 0 | 433 | 8 | 0 |
| EV 7 | Event 1 (CB&A) | 20 | 100 | 100 | 200 | 50 | 0 | 0 | 0 | 1000 | 0 | 0 | 0 | 0 | 0 | 50 | 0 | 0 | 952 | 3 | 1920 |
| EV 8 | Event 2 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 9 | Event 3 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 10 | Event 4 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 11 | Event 5 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 12 | Event 6 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 13 | Event 7 (CB&A) | 40 | 1000 | 300 | 400 | 50 | 0 | 0 | 0 | 0 | 100 | 10 | 0 | 0 | 0 | 0 | 0 | 0 | 752 | 4 | 1066 |
| EV 14 | Event 8 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 15 | Event 9 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 16 | Event 10 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 17 | Event 11 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 18 | Event 12 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 19 | Event 13 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 20 | Event 14 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 21 | Event 15 (CB&A) | 0 | 0 | 0 | 0 | 0 | 0 | 0 | 0 | 0 | 0 | 0 | 0 | 0 | 0 | 0 | 0 | 0 | 433 | 8 | 0 |
| EV 22 | Event 1 (PE) | 0 | 0 | 0 | 0 | 0 | 0 | 0 | 0 | 0 | 0 | 0 | 0 | 0 | 0 | 0 | 0 | 0 | 433 | 8 | 0 |
| EV 23 | Event 2 (PE) | 0 | 0 | 0 | 0 | 0 | 0 | 0 | 0 | 0 | 0 | 0 | 0 | 0 | 0 | 0 | 0 | 0 | 433 | 8 | 0 |
| EV 24 | Event 3 (PE) | 0 | 0 | 0 | 0 | 0 | 0 | 0 | 0 | 0 | 0 | 0 | 0 | 0 | 0 | 0 | 0 | 0 | 433 | 8 | 0 |
| EV 25 | Event 4 (PE) | 0 | 0 | 0 | 0 | 0 | 0 | 0 | 0 | 0 | 0 | 0 | 0 | 0 | 0 | 0 | 0 | 0 | 433 | 8 | 0 |
|  | Mean Vector | 15 | 411 | 52 | 37 | 19 | 1 | 0 | 0 | 119 | 4 | 0 | 0 | 0 | 0 | 2 | 0 | 0 |  |  |  |
|  | ref stdev | 29 | 1926 | 199 | 111 | 34 | 3 | 0 | 0 | 423 | 19 | 2 | 0 | 0 | 0 | 10 | 0 | 0 |  |  |  |

Figure 6

Europäisches
Patentamt

European
Patent Office

Office européen
des brevets

## EUROPEAN SEARCH REPORT

Application Number

EP 08 25 4023

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | BYENG D YOUN ET AL: "Eigenvector dimension reduction (EDR) method for sensitivity-free probability analysis" STRUCTURAL AND MULTIDISCIPLINARY OPTIMIZATION, SPRINGER, BERLIN, DE, vol. 37, no. 1, 13 February 2008 (2008-02-13), pages 13-28, XP019651843 ISSN: 1615-1488 * the whole document * ----- | 1-17 | INV. G06Q10/00 |

TECHNICAL FIELDS
SEARCHED      (IPC)

G06Q

The present search report has been drawn up for all claims

| Place of search | Date of completion of the search | Examiner |
|---|---|---|
| Munich | 2 June 2009 | Beatty, John |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)